# EUROPÄISCHE PATENTANMELDUNG

(11) **EP 4 131 699 A1**
(43) Veröffentlichungstag der Anmeldung: **08.02.2023**
(21) Anmeldenummer: 22188072.7
(22) Anmeldetag: 01.08.2022
(51) Int. Cl.: H02J 3/18

(54) **WANDLEREINRICHTUNG UND GLÄTTUNGSSYSTEM FÜR NETZSTROMVERBRAUCHER**

(30) Priorität: 03.08.2021 DE 102021208387
(71) Anmelder: Zimmermann Industrieservice Elektrotechnik Ideen UG (haftungsbeschränkt), 72644 Oberboihingen (DE)
(72) Erfinder: Kleine, Peter, 72649 Wolfschulgen (DE)
(74) Vertreter: Patentanwälte Magenbauer & Kollegen Partnerschaft mbB

(57) **Zusammenfassung**

Die Erfindung betrifft eine Wandlereinrichtung (30; 50) zur kurzzeitigen elektrisch-magnetischen Energiewandlung, mit einem Eingangsanschluss (31), der zur Verbindung mit einer Stromquelle (5, 6, 7, 8, 14) ausgebildet ist und mit einem Ausgangsanschluss (32), der zur Verbindung mit einem elektrischen Verbraucher (2, 3, 4) ausgebildet ist, sowie mit einer Verbraucherspule (34), die mit einem ersten Windungsende (46) mit dem Eingangsanschluss (31) und mit einem zweiten Windungsende (47) mit dem Ausgangsanschluss (32) verbunden ist und die einen rahmenförmig ausgebildeten Eisenkern (36; 56) abschnittsweise umgibt, um einen magnetischen Fluss in den Eisenkern (36; 56) einzuprägen, sowie mit einer Steuerspule (37; 67), die den Eisenkern (36; 56) abschnittsweise umgibt, wobei ein erstes Windungsende (38; 75) und ein zweites Windungsende (39; 76) der Steuerspule (37; 67) mit einer Steuerschaltung (40) verbunden sind, die für eine Beeinflussung eines Spulenstroms in der Steuerspule (37; 67) ausgebildet ist, um den magnetischen Fluss im Eisenkern (36; 56) zu beeinflussen.

## Beschreibung

Die Erfindung betrifft eine Wandlereinrichtung und ein Glättungssystem für Netzstromverbraucher.

Aus dem Stand der Technik ist es bekannt, bei großen Stromkunden wie beispielsweise Industrieunternehmen, eine Blindleistungskompensation zwischen dem vom Energieversorger bereitgestellten Hauptstromanschluss und dem internen Stromnetz des Stromverbrauchers, beispielsweise einem auf einem Betriebsgelände oder in einer Fabrikationshalle installierten Stromnetz mit daran angeschlossenen Stromverbrauchern, mit einer Blindleistungskompensationsanlage vorzusehen.

Die Aufgabe der Erfindung besteht darin, eine Wandlereinrichtung und ein Glättungssystem für Netzstromverbraucher bereitzustellen, die eine verbesserte Blindleistungskompensation ermöglichen.

Diese Aufgabe wird gemäß einem ersten Erfindungsaspekt dadurch gelöst, dass eine Wandlereinrichtung, die zur kurzzeitigen elektrisch-magnetischen Energiewandlung ausgebildet ist, einen Eingangsanschluss zur Verbindung mit einer Stromquelle und einen Ausgangsanschluss zur Verbindung mit einem elektrischen Verbraucher sowie eine Verbraucherspule aufweist, wobei die Verbraucherspule mit einem ersten Windungsende mit dem Eingangsanschluss und mit einem zweiten Windungsende mit dem Ausgangsanschluss verbunden ist und einen rahmenförmig ausgebildeten Eisenkern abschnittsweise umgibt, um einen magnetischen Fluss in den Eisenkern einzuprägen und wobei eine Steuerspule vorgesehen ist, die den Eisenkern abschnittsweise umgibt, wobei ein erstes Windungsende und ein zweites Windungsende der Steuerspule mit einer Steuerschaltung verbunden sind, die für eine Beeinflussung eines Spulenstroms in der Steuerspule ausgebildet ist, um den magnetischen Fluss im Eisenkern zu beeinflussen.

Dabei wird der Eingangsanschluss über einen Phasenleiter mit dem Hauptstromanschluss verbunden, an dem die elektrische Energie zum Betrieb des Verbrauchers, der über die Wandlereinrichtung mit elektrischer Energie versorgt werden soll, bereitgestellt wird. Der elektrische Verbraucher wird hierbei am Ausgangsanschluss der Wandlereinrichtung angeschlossen, wobei zwischen dem Eingangsanschluss und dem Ausgangsanschluss eine Verbraucherspule angeordnet ist, die auf einen Abschnitt eines rahmenförmig ausgebildeten Eisenkerns gewickelt ist. Bei einem Stromfluss zwischen dem Eingangsanschluss und dem Ausgangsanschluss kommt es aufgrund der dadurch hervorgerufenen magnetischen Induktion in der Verbraucherspule zu einem magnetischen Fluss im Eisenkern, womit eine teilweise Wandlung der in die Verbraucherspule eingespeisten elektrischen Energie in magnetische Energie bewirkt wird.

Typischerweise ist vorgesehen, dass eine elektrische Versorgung eines Verbrauchers dreiphasig vorgenommen wird, so dass die Wandlereinrichtung rein exemplarisch einen ersten Eingangsanschluss, eine erste Verbraucherspule und einen ersten Ausgangsanschluss sowie einen zweiten Eingangsanschluss, eine zweite Verbraucherspule und einen zweiten Ausgangsanschluss und einen dritten Eingangsanschluss, eine dritte Verbraucherspule und einem dritten Ausgangsanschluss aufweist.

Um eine gezielte Einflussnahme auf den Stromverlauf nehmen zu können, der sich zwischen dem Eingangsanschluss und dem Ausgangsanschluss in Abhängigkeit von den Eigenschaften des angeschlossenen Verbrauchers sowie in Abhängigkeit von den Eigenschaften der Verbraucherspule einstellen kann, ist dem Eisenkern wenigstens eine Steuerspule zugeordnet, die den Eisenkern abschnittsweise umgibt. Die Steuerspule weist ein erstes Windungsende und ein zweites Windungsende auf, die jeweils mit einer Steuerschaltung verbunden sind. Dabei ist es die Aufgabe der Steuerschaltung, einen durch Induktion in der Steuerspule aufgrund des magnetischen Flusses im Eisenkern bewirkten Stromfluss in einer Weise zu beeinflussen. Durch diese Einflussnahme der Steuerschaltung auf den Stromfluss in der Steuerspule soll erreicht werden, dass ein gewisser Anteil des magnetischen Flusses im Eisenkern kurzzeitig in der Steuerspule zwischengespeichert werden kann und bedarfsabhängig wieder als magnetischer Fluss in den Eisenkern eingekoppelt werden kann, um an die Verbraucherspule bereitgestellt werden und dort durch Induktion wieder in einen elektrischen Stromfluss für den Verbraucher gewandelt zu werden.

Somit besteht die Zielsetzung der Wandlereinrichtung darin, einen zeitlich variablen Strombedarf des Verbrauchers, der an der Verbraucherspule angeschlossen ist, durch eine Kombination eines vom Hauptstromanschluss bereitgestellten Stromanteils sowie eines in die Verbraucherspule aus dem magnetischen Fluss im Eisenkern durch Induktion eingekoppelten Stromanteils derart zu beeinflussen, dass der Strombedarf des Verbrauchers vollständig gedeckt werden kann und dennoch am Eingangsanschluss der Wandlereinrichtung ein möglichst konstanter Strom vom Hauptstromanschluss bereitgestellt wird.

Insbesondere dient die Wandlereinrichtung dazu, kurzfristige Stromschwankungen, die durch angeschlossene Verbraucher hervorgerufen werden und die auch als Stromverunreinigungen bezeichnet werden, in der Art einer Pufferfunktion auszugleichen und damit eine verbesserte Ausnutzung der vom Stromversorger am Haupstromanschluss bezogenen elektrischen Energiemenge zu verwirklichen.

Vorzugsweise ist für jede Phase, mit der der Verbraucher mit elektrischer Energie versorgt wird, neben der jeweils zugeordneten Verbraucherspule auch eine jeweils zugeordnete Steuerspule mit nachgeschalteter Steuerschaltung vorgesehen. Somit ergibt sich exemplarisch bei einer dreiphasigen Versorgung eines elektrischen Verbrauchers eine Wandlereinrichtung mit einer Parallelschaltung von insgesamt drei Verbraucherspulen, drei Steuerspulen sowie drei Steuerschaltungen.

Der rahmenförmige Eisenkern kann beispielsweise einer rechteckige oder quadratische Profilierung aufweisen oder als ovaler oder kreisrunder Ring ausgebildet sein. Ein Querschnitt des Eisenkerns kann entweder rechteckig oder quadratisch oder oval oder kreisförmig ausgebildet sein. Andere Geometrien für die Profilierung und/oder den Querschnitt des Eisenkerns können ebenfalls vorgesehen sein. Entscheidend ist, dass die Verbraucherspule und die Steuerspule vom gleichen magnetischen Fluss durchflutet werden können.

Vorteilhafte Weiterbildungen der Erfindung sind Gegenstand der Unteransprüche.

Zweckmäßig ist es, wenn dem Eingangsanschluss und/oder dem Ausgangsanschluss eine Messeinrichtung zur Erfassung wenigstens eines Kennwerts aus der Gruppe: Scheinleistung S, Wirkleistung P, Blindleistung Q, Spannung U, Strom I, Phasenverschiebung cos phi, gesamte harmonische Verzerrung THD-I, zugeordnet ist und dass die Messeinrichtung mit der Steuerschaltung zur Bereitstellung eines Messsignals verbunden ist. Die Messeinrichtung stellt ein elektrisches Signal an die Steuerschaltung zur Verfügung, um eine Regelung des Stromflusses in der Steuerspule und eines daraus resultierenden magnetischen Flusses im Eisenkern auf Basis des wenigstens einen Kennwerts vornehmen zu können. Vorzugsweise ist vorgesehen, eine Messwerterfassung mit einer Abtastfrequenz vorzunehmen, die größer als die übliche Netzfrequenz von 50Hz der Stromversorgung des Verbrauchers ist.

Bevorzugt ist vorgesehen, dass die Messeinrichtung für eine Messwerterfassung mit einer Abtastrate von mindestens 1 kHz, vorzugweise von wenigstens 5 kHz, insbesondere von wenigstens 10 kHz ausgebildet ist und dass die Steuerschaltung für eine Messwertverarbeitung mit einer Taktfrequenz von mindestens 1 kHz, vorzugweise von wenigstens 5 kHz, insbesondere von wenigstens 10 kHz, ausgebildet ist. Hierdurch wird eine Regelung für den Stromfluss in der Steuerspule ermöglicht, mit der auch Ereignisse mit sehr kurzer Zeitdauer und somit hochfrequente Ereignisse im Stromverlauf der jeweiligen Phase wie beispielsweise Flicker und Oberschwingungen im Hinblick auf Netzrückwirkungen auf den Hauptstromanschluss zumindest teilweise kompensiert werden können.

Bei einer Weiterbildung der Erfindung ist vorgesehen, dass die Steuerschaltung für eine Beeinflussung des Spulenstroms in der Steuerspule mit einer Taktfrequenz von mindestens 1 kHz, vorzugweise von wenigstens 5 kHz, insbesondere von wenigstens 10 kHz, ausgebildet ist. Hierdurch wird eine Einflussnahme auf den Verbraucherstrom ermöglicht, die aufgrund der zumindest zwanzigfachen, vorzugsweise wenigstens hundertfachen, insbesondere wenigstens zweihundertfachen, Taktfrequenz für die Regelung bezogen auf die üblicherweise zugrundezulegende Netzfrequenz für die Stromversorgung des Verbrauchers von 50Hz als stufenlose Regelung betrachtet werden kann. Vorzugsweise findet die Beeinflussung des Spulenstroms in der Steuerspule durch die Steuerschaltung unter Verwendung von elektronischen Bauelementen, insbesondere elektrisch ansteuerbaren Halbleiterschaltern, statt, um einen verschleißfreien Betrieb der Steuerschaltung zu gewährleisten.

In weiterer Ausgestaltung der Erfindung ist vorgesehen, dass das zweite Windungsende der Verbraucherspule elektrisch mit dem zweiten Windungsende der Steuerspule verbunden ist und/oder dass die Steuerspule als induktiver Tiefpassfilter, vorzugsweise als Kombination einer Induktivität und eines ohmschen Widerstands, insbesondere eines als bifilare Wicklung ausgebildeten ohmschen Widerstands, ausgebildet ist. Durch die Verbindung zwischen dem zweiten Windungsende der Verbraucherspule und dem zweiten Windungsende der Steuerspule kann ein Stromfluss in der Steuerspule direkt an den mit dem zweiten Windungsende der Verbraucherspule verbundenen Ausgangsanschluss bereitgestellt werden. Vorzugsweise ist eine Auslegung der Steuerspule derart vorgesehen, dass diese als Tiefpassfilter wirkt und somit hochfrequente Stromspitzen Bedämpfung kann, die zu unerwünschten Netzrückwirkungen führen können. Bevorzugt ist vorgesehen, dass die Steuerspule eine definierte Induktivität sowie einen definierten ohmschen Widerstand aufweist. Besonders vorteilhaft ist es, wenn der definierte ohmsche Widerstand von einem in spezieller Wickeltechnik erstellten Spulenabschnitt der Steuerspule gebildet wird. Üblicherweise wird eine Spule durch eine entlang einer Wickelachse angeordnete wendelförmige Anordnung aufeinanderfolgender Spulenwindungen gebildet. Um einen definierten ohmschen Widerstand auf Basis von Spulenwickeltechnik herzustellen, ist vorgesehen, dass zunächst eine innere Lage wendelförmig in einer ersten Richtung längs einer Wickelachse angeordneter Spulenwindungen vorgesehen wird, die dann von einer äußeren Lage wendelförmig in einer zweiten, der ersten entgegengesetzten Richtung längs der Wickelachse angeordneter Spulenwindungen überdeckt wird. Durch diese zweilagige Anordnung entgegengesetzt gewendelter Spulenabschnitte kommt es bei einem Stromfluss durch diesen Bereich der Steuerspule zu einer Aufhebung der induktiven Anteile der jeweiligen Spulenabschnitte, so dass lediglich der ohmsche Widerstand verbleibt. Eine solche Spule wird auch als bifilare Spule bezeichnet.

Vorteilhaft ist es, wenn die Steuerschaltung derart eingerichtet ist, dass eine Versorgungsspannung, die am zweiten Windungsende der Verbraucherspule bereitgestellt wird, einer unteren Intervallgrenze eines vorgegebenen Verbraucher-Versorgungsspannungsintervalls entspricht. Dies ermöglicht einen besonders energieeffizienten Betrieb des Verbrauchers bzw. der Verbraucher, die an die Wandlereinrichtung angeschlossen sind. Hierbei ist vorgesehen, mit Hilfe der Steuerschaltung und der wenigstens einen Messeinrichtung am Ausgangsanschluss der Verbraucherspule eine stabile Ausgangsspannung zur Verfügung zu stellen, wobei ein Regelverhalten der Steuerschaltung derart ausgebildet ist, dass die Versorgungsspannung zuverlässig innerhalb eines schmalen Toleranzbands oberhalb der unteren Intervallgrenze des Versorgungsspannungsintervalls angesiedelt ist.

Ferner kann die Steuerschaltung eine Kommunikationsschnittstelle, insbesondere eine Busschnittstelle aufweisen, die eine Kommunikation mit einer übergeordneten Steuerung oder mit einem Energiemanagementsystem ermöglicht. Hierzu kann vorgesehen sein, dass an der Kommunikationsschnittstelle eine Bereitstellung von Daten vorgesehen ist, die Messwerte der wenigstens einen Messeinrichtung und/oder Regelparameter der Steuerschaltung umfassen und die beispielsweise zur Auswertung eines Wirkungsgrads der Wandlereinrichtung genutzt werden können.

Zweckmäßig ist es, wenn zwischen dem Eingangsanschluss und dem Ausgangsanschluss parallel zur Verbraucherspule eine Schalteinrichtung angebracht ist, die elektrisch derart mit der Steuerschaltung verbunden ist, dass die Schalteinrichtung bei Vorliegen eines Schaltsignals der Steuerschaltung einen Unterbrechungszustand einnimmt, bei dem eine elektrische Verbindung zwischen dem Eingangsanschluss und dem Ausgangsanschluss unterbrochen ist, und bei Abwesenheit des Schaltsignals einen Schließzustand einnimmt, bei dem die elektrische Verbindung zwischen dem Eingangsanschluss und dem Ausgangsanschluss geschlossen ist. Die Aufgabe der Schalteinrichtung liegt darin, auch bei Ausfall der Wandlereinrichtung eine zuverlässige Versorgung des Verbrauchers bzw. der Verbraucher mit elektrischer Energie zu gewährleisten. Hierzu ist vorgesehen, dass die Schalteinrichtung bei Vorliegen eines Schaltsignals der Steuerschaltung in einem Unterbrechungszustand gehalten wird, so dass ein Stromfluss zwischen dem Eingangsanschluss und dem Ausgangsanschluss der Wandlereinrichtung über die Verbraucherspule stattfindet. Kommt es hingegen zu einem Ausfall der Steuerschaltung, findet typischerweise auch eine Abschaltung des Schaltsignals statt, so dass die Schalteinrichtung ein Schließzustand einnimmt und ein Stromfluss zwischen dem Eingangsanschluss und dem Ausgangsanschluss sowohl durch die Verbraucherspule als auch über die Schalteinrichtung stattfinden kann.

Die Aufgabe der Erfindung wird gemäß einem zweiten Erfindungsaspekt durch ein Glättungssystem für Netzstromverbraucher mit mehreren Wandlereinrichtungen gelöst, wobei jeder Ausgangsanschluss jeder Wandlereinrichtung mit einem Eingangsanschluss einer Kompensationsanlage verbunden ist und wobei die Kompensationsanlage eine Kompensationssteuerung aufweist, die mit einem Wechselrichter und mit einem Zwischenkreis verbunden ist und die für eine Ermittlung und Steuerung der Phasenverschiebung cos phi ausgebildet ist, um an einem Verbraucheranschluss der Kompensationsanlage, der zum Anschluss eines Verbrauchers ausgebildet ist, eine Ausgangsspannung mit vorgebbarer Phasenverschiebung cos phi bereitzustellen. Durch die Kombination mehrerer Wandlereinrichtungen mit einer Kompensationsanlage, die dazu ausgebildet ist, unerwünschte Verschiebungsblindleistung und damit verbundene Blindströme von elektrischen Verbrauchern zu reduzieren, kann eine vorteilhafte Stromversorgung eines Verbrauchers oder mehrerer Verbraucher bewirkt werden. Hierbei findet sowohl eine Blindstromkompensation als auch eine Glättung des Stromverbrauchs statt, womit eine signifikante Stromersparnis erzielt werden kann.

Bei einer Weiterbildung des Glättungssystems ist vorgesehen, dass die Kompensationsanlage elektrisch mit der Steuerschaltung verbunden ist und für eine Bereitstellung eines Messwerts für die Phasenverschiebung cos phi an die Steuerschaltung ausgebildet ist, und dass die Steuerschaltung für eine Bereitstellung eines Kompensationssignals an die Kompensationssteuerung ausgebildet ist, wobei eine Erfassung der Phasenverschiebung cos phi in der Kompensationssteuerung mit einer Abtastrate von mindestens 10 Hz, vorzugweise von wenigstens 20 Hz, insbesondere von wenigstens 50 Hz, ausgebildet ist und dass die Steuerschaltung für eine Bereitstellung des Kompensationssignals mit einer Taktfrequenz von mindestens 10 Hz, vorzugweise von wenigstens 20 Hz, insbesondere von wenigstens 50 Hz ausgebildet ist. Bei dieser Weiterbildung der Erfindung ist vorteilhaft, dass die Steuerschaltung in die Lage versetzt wird, sowohl die Glättung des Stromverbrauchs als auch die Blindleistungskompensation für die angeschlossenen Verbraucher vorzunehmen und damit ein besonders günstiger Wirkungsgrad für das Glättungssystem erzielt werden kann.

In weiterer Ausgestaltung des Glättungssystems ist vorgesehen, dass alle Verbraucherspulen und alle Steuerspulen an einem gemeinsamen rahmenförmig ausgebildeten Eisenkern angeordnet sind. Hierdurch können Asymmetrien zwischen den einzelnen Phasen durch die jeweils zugeordneten Steuerschaltungen ausgelegt werden, wobei die einzelnen Steuerschaltung man und die zugeordneten Steuerspulen stets auf den gesamten magnetischen Fluss im Eisenkern zugreifen können.

Vorteilhafte Ausführungsformen der Erfindung sind in der Zeichnung dargestellt. Hierbei zeigt:
- Figur 1: eine streng schematische Darstellung eines elektrischen Versorgungsnetzes für elektrische Verbraucher, das ein Glättungssystem mit Wandleranlage und eine Kompensationsanlage umfasst,
- Figur 2: eine streng schematische Darstellung einer ersten Ausführungsform einer Wandleranlage,
- Figur 3: eine streng schematische Darstellung einer zweiten Ausführungsform einer Wandleranlage, und
- Figur 4: eine streng schematische Darstellung einer Steuerspule mit bifilarem ohmschen Widerstand.

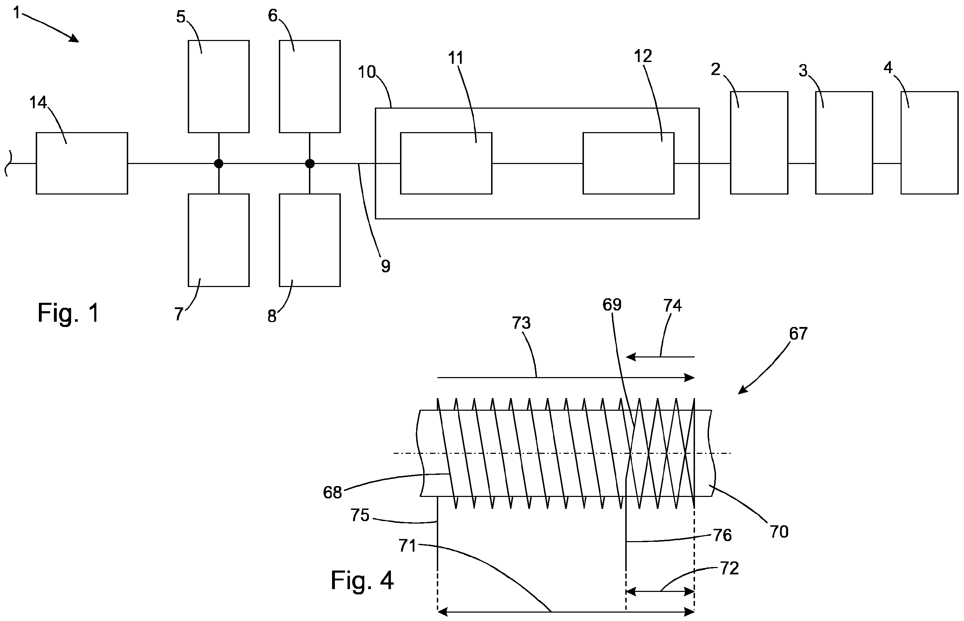

Ein in der Figur 1 streng schematisch dargestelltes elektrisches Versorgungsnetz 1 dient zur elektrischen Versorgung mehrerer elektrischer Verbraucher 2, 3 und 4, die beispielsweise in einer gemeinsamen Werkshalle untergebracht sind und bei denen es sich insbesondere um Produktionsmaschinen mit erheblichem Bedarf an elektrischen Strom wie Fräsmaschinen, Kunststoff-Spritzgussmaschinen und Öfen handelt.

Eine Bereitstellung elektrischer Energie an die Verbraucher 2 bis 4 kann aus unterschiedlichen Quellen erfolgen, die auch parallel zueinander für eine Energiebereitstellung genutzt werden können. Bei den Quellen handelt es sich beispielsweise um einen Hauptstromanschluss 14, der insbesondere einem Mittelspannungstransformator eines Energieversorgers zugeordnet sein kann und der mit einem nicht dargestellten, überregionalen Stromnetz verbunden ist. Ferner können die Quellen lokale Stromerzeugungseinrichtungen wie eine Windkraftanlage 5, eine Solaranlage 6, ein Blockheizkraftwerk 7 und eine Notstromerzeugungsanlage 8 umfassen. Sämtliche der vorgenannten Quellen sind zur Einspeisung von elektrischer Energie in eine elektrische Anschlussleitung 9 vorgesehen, die mit einem Glättungssystem 10 elektrisch verbunden ist.

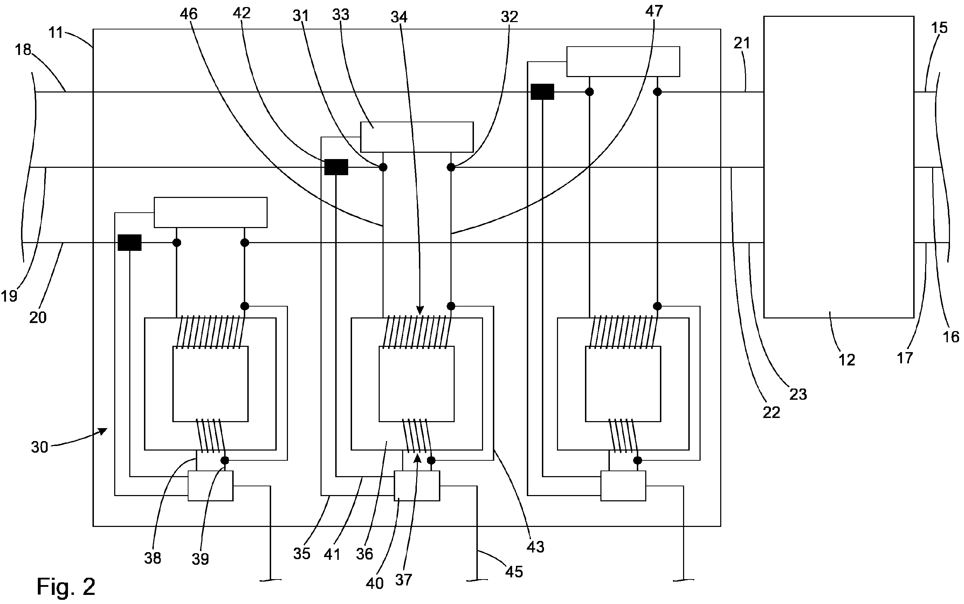

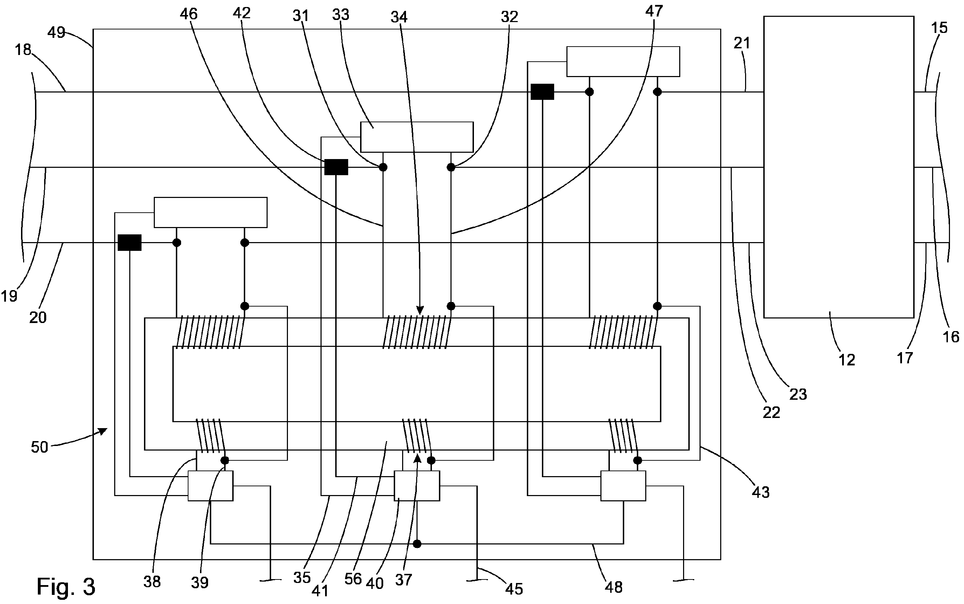

Das Glättungssystem 10 umfasst eine Wandleranlage 11 sowie eine Kompensationsanlage 12, die rein exemplarisch in Reihenschaltung in die Anschlussleitung 9 eingeschleift sind, wobei die Wandleranlage 11 nachstehend im Zusammenhang mit den Figuren 2 und 3 näher beschrieben wird.

An einem den Quellen abgewandten Endbereich der Anschlussleitung 9 sind die Verbraucher 2 bis 4 angeschlossen. Hierbei ist beispielhaft vorgesehen, dass jeder der Verbraucher 2 bis 4 über die Anschlussleitung 9 mit Drehstrom versorgt wird. Wie der Darstellung der Figur 2 entnommen werden kann, umfasst die Wandleranlage 11 in einer ersten Ausführungsform für jede der drei Phasenleitungen 15, 16 und 17 der Anschlussleitung 9 jeweils eine diskret ausgebildete Wandlereinrichtung 30, wobei die Wandlereinrichtungen 30 identisch aufgebaut sind, so dass die nachstehende Beschreibung für eine der Wandlereinrichtungen 30 auch auf die beiden anderen Wandlereinrichtungen 30 zutrifft.

Die Wandlereinrichtung 30 umfasst einen Eingangsanschluss 31 und einen Ausgangsanschluss 32, wobei der Eingangsanschluss 31 mit einem versorgungsseitigen Phasenleitungsabschnitt 18 verbunden ist und wobei der Ausgangsanschluss mit einem lastseitigen Phasenleitungsabschnitt 21 verbunden ist. Zwischen dem Eingangsanschluss 31 und dem Ausgangsanschluss 32 sind in einer Parallelschaltung eine Schalteinrichtung 33 und eine Verbraucherspule 34 angeordnet.

Die Schalteinrichtung 33 kann als elektromechanischer Schalter oder als elektronischer Schalter ausgebildet sein und befindet sich während eines Normalbetriebs der Wandlereinrichtung 30 in einem Unterbrechungszustand, in dem kein Stromfluss über die Schalteinrichtung 33 stattfindet. Eine Umschaltung der Schalteinrichtung 33 aus dem Unterbrechungszustand in einen Schließzustand, in dem ein Stromfluss vom Eingangsanschluss 31 über die Schalteinrichtung 33 zum Ausgangsanschluss 32 ermöglicht wird, kann beispielsweise durch einen nicht dargestellten, von einem Bediener manuell zu bedienenden Umschalter vorgenommen werden. Alternativ kann diese Umschaltung mittels eines Steuersignals vorgenommen werden, das über eine elektrische Steuerleitung 35 an die Schalteinrichtung 33 bereitgestellt wird. Vorzugsweise ist vorgesehen, dass die Schalteinrichtung 33 bei Vorliegen des Steuersignals den Unterbrechungszustand einnimmt und bei Abschaltung des Steuersignals in den Schließzustand übergeht.

Die Verbraucherspule 34 ist um einen Abschnitt eines rein exemplarisch in der als Draufsicht gezeigten Darstellung gemäß der Figur 2 mit quadratischer Profilierung ausgebildeten Eisenkerns 36 gewickelt. Beispielhaft ist vorgesehen, dass der Eisenkern 36 in einer quer zur Darstellungsebene der Figur 2 ausgerichteten, nicht dargestellten Querschnittsebene einen rechteckigen oder quadratischen Querschnitt aufweist. Ein erstes Windungsende 46 der Verbraucherspule 34 ist mit dem Eingangsanschluss 31 verbunden, ein zweites Windungsende 47 der Verbraucherspule 34 ist mit dem Ausgangsanschluss 32 verbunden.

Um einem weiteren Abschnitt des Eisenkerns 36 ist beabstandet zur Verbraucherspule 34 eine Steuerspule 37 gewickelt, deren erstes Windungsende 38 und der ein zweites Windungsende 39 elektrisch mit einer Steuerschaltung 40 verbunden sind. Die Steuerschaltung 40 ist zur Regelung eines Spulenstroms in der Steuerspule 37 ausgebildet und umfasst beispielsweise einen nicht dargestellten Mikroprozessor oder Microcontroller, der mit einer geeigneten Software zur Durchführung der Spulenstromregelung ausgerüstet ist.

Für die Durchführung der Spulenstromregelung in der Steuerspule ist die Steuerschaltung 40 rein exemplarisch über eine Sensorleitung 41 mit einer beispielhaft dem versorgungsseitigen Phasenleitungsabschnitt 18 zugeordneten Messeinrichtung 42 verbunden, die zur Erfassung eines Kennwerts des Stromflusses in der Phasenleitung 15 sowie zur Bereitstellung eines vom erfassten Kennwert abhängigen Sensorsignals an die Steuerschaltung 40 ausgebildet ist.

Ferner ist die Steuerschaltung 40 über die Steuerleitung 35 mit der Schalteinrichtung 33 verbunden und ist dazu ausgebildet, während eines Normalbetriebs der Wandlereinrichtung 30 ein Schaltsignal eine Schalteinrichtung 33 bereitzustellen, um die Schalteinrichtung 33 im Unterbrechungszustand zu halten.

Ferner ist vorgesehen, dass das zweite Windungsende 39 über eine Verbindungsleitung 43 elektrisch mit dem Ausgangsanschluss 32 verbunden ist, womit ein direkter Stromfluss zwischen dem Ausgangsanschluss 32 und dem zweiten Windungsende 39 ermöglicht wird.

Die Wandleranlage 49 gemäß der Figur 3 unterscheidet sich von der Wandleranlage 11 gemäß der Figur 2 lediglich durch die Gestaltung des Eisenkerns 56, der von allen drei Wandlereinrichtungen 50 gemeinsam genutzt wird. Dementsprechend werden bei der Beschreibung der Wandleranlage 49 für Komponenten, die funktionsgleich mit Komponenten der Wandleranlage 11 sind, die gleichen Bezeichnungen genutzt und es wird auf eine nochmalige Beschreibung dieser Komponenten verzichtet.

Der von den Wandlereinrichtungen 50 gemeinsam genutzte Eisenkern 56 ermöglicht es, Asymmetrien zwischen den einzelnen Phasenleitungen 15, 16, 17 durch die jeweils zugeordneten Steuerschaltungen 40 auszugleichen, wobei die Steuerschaltungen 40 zu diesem Zweck über eine gemeinsame Kommunikationsleitung 48 miteinander verbunden sind.

Die in der Figur 4 dargestellte Steuerspule 67 ist bereichsweise als bifilare Spule ausgebildet und weist einen ersten Wicklungsabschnitt 68 und einen zweiten Wicklungsabschnitt 69 auf. Der erste Wicklungsabschnitt 68 ist als einlagige wendelförmige Spule auf einen Eisenkernabschnitt 70 aufgewickelt, der einem der Eisenkerne 36, 56 zugehörig sein kann und erstreckt sich über eine erste Wicklungslänge 71 in einer ersten Wicklungsrichtung 73. Der zweite Wicklungsabschnitt 69 ist als einlagige wendelförmige Spule rein exemplarisch auf den ersten Wicklungsabschnitt 68 aufgewickelt und erstreckt sich über eine zweite Wicklungslänge 72 in einer zweiten Wicklungsrichtung 74, die der ersten Wicklungsrichtung 73 entgegengesetzt ist. Rein exemplarisch beträgt eine Längenausdehnung des zweiten Wicklungsabschnitts 69 ca. 25 Prozent einer Längenausdehnung des ersten Wicklungsabschnitts 68. Ein erstes Windungsende 75 der Steuerspule 67 befindet sich am Beginn des ersten Wicklungsabschnitts 68, ein zweites Windungsende 76 der Steuerspule befindet sich am Ende des zweiten Wicklungsabschnitts 69.

Durch die teilweise Überdeckung des ersten Wicklungsabschnitts 68 durch den zweiten Wicklungsabschnitt 69 findet bei einem Stromfluss durch die Steuerspule 67 eine zumindest nahezu vollständige, gegenseitige Aufhebung des magnetischen Flusses, der von dem durch den zweiten Wicklungsabschnitt 69 überdeckten Bereich des ersten Wicklungsabschnitts 69 bereitgestellt wird und des magnetischen Flusses, der vom zweiten Wicklungsabschnitt 69 bereitgestellt wird, statt. Diese gegenseitige Aufhebung des magnetischen Flusses resultiert aus dem gegensinnigen Wickelsinn der betreffenden Wicklungsabschnitte 68, 69 und führt dazu, dass dieser Bereich der Steuerspule 67 als rein ohmscher Widerstand betrachtet werden kann.

## Patentansprüche

1. Wandlereinrichtung (30; 50) zur kurzzeitigen elektrisch-magnetischen Energiewandlung, mit einem Eingangsanschluss (31), der zur Verbindung mit einer Stromquelle (5, 6, 7, 8, 14) ausgebildet ist und mit einem Ausgangsanschluss (32), der zur Verbindung mit einem elektrischen Verbraucher (2, 3, 4) ausgebildet ist, sowie mit einer Verbraucherspule (34), die mit einem ersten Windungsende (46) mit dem Eingangsanschluss (31) und mit einem zweiten Windungsende (47) mit dem Ausgangsanschluss (32) verbunden ist und die einen rahmenförmig ausgebildeten Eisenkern (36; 56) abschnittsweise umgibt, um einen magnetischen Fluss in den Eisenkern (36; 56) einzuprägen, sowie mit einer Steuerspule (37; 67), die den Eisenkern (36; 56) abschnittsweise umgibt, wobei ein erstes Windungsende (38; 75) und ein zweites Windungsende (39; 76) der Steuerspule (37; 67) mit einer Steuerschaltung (40) verbunden sind, die für eine Beeinflussung eines Spulenstroms in der Steuerspule (37; 67) ausgebildet ist, um den magnetischen Fluss im Eisenkern (36; 56) zu beeinflussen.

2. Wandlereinrichtung (30; 50) nach Anspruch 1, **dadurch gekennzeichnet, dass** dem Eingangsanschluss (31) und/oder dem Ausgangsanschluss (32) eine Messeinrichtung (42) zur Erfassung wenigstens eines Kennwerts aus der Gruppe: Scheinleistung S, Wirkleistung P, Blindleistung Q, Spannung U, Strom I, Phasenverschiebung cos phi, gesamte harmonische Verzerrung THD-I, zugeordnet ist und dass die Messeinrichtung (42) mit der Steuerschaltung (40) zur Bereitstellung eines Messsignals verbunden ist.

3. Wandlereinrichtung (30; 50) nach Anspruch 2, **dadurch gekennzeichnet, dass** die Messeinrichtung (42) für eine Messwerterfassung mit einer Abtastrate von mindestens 1 kHz, vorzugweise von wenigstens 5 kHz, insbesondere von wenigstens 10 kHz ausgebildet ist und dass die Steuerschaltung (40) für eine Messwertverarbeitung mit einer Taktfrequenz von mindestens 1 kHz, vorzugweise von wenigstens 5 kHz, insbesondere von wenigstens 10 kHz ausgebildet ist.

4. Wandlereinrichtung (30; 50) nach Anspruch 3, **dadurch gekennzeichnet, dass** die Steuerschaltung (40) für eine Beeinflussung des Spulenstroms in der Steuerspule (37; 67) mit einer Taktfrequenz von mindestens 1 kHz, vorzugweise von wenigstens 5 kHz, insbesondere von wenigstens 10 kHz ausgebildet ist.

5. Wandlereinrichtung nach einem der vorhergehenden Ansprüche, **dadurch gekennzeichnet, dass** das zweite Windungsende (47) der Verbraucherspule (34) elektrisch mit dem zweiten Windungsende (39; 76) der Steuerspule (37; 67) verbunden ist und/oder dass die Steuerspule (37; 67) als induktiver Tiefpassfilter, vorzugsweise als Kombination einer Induktivität und eines ohmschen Widerstands, insbesondere eines als bifilare Wicklung ausgebildeten ohmschen Widerstands, ausgebildet ist.

6. Wandlereinrichtung (30; 50) nach einem der vorhergehenden Ansprüche, **dadurch gekennzeichnet, dass** die Steuerschaltung (40) derart eingerichtet ist, dass eine Versorgungsspannung, die am zweiten Windungsende (47) der Verbraucherspule (34) bereitgestellt wird, einer unteren Intervallgrenze eines vorgegebenen Versorgungsspannungsintervalls entspricht.

7. Wandlereinrichtung (30; 50) nach einem der vorhergehenden Ansprüche, **dadurch gekennzeichnet, dass** zwischen dem Eingangsanschluss (31) und dem Ausgangsanschluss (32) parallel zur Verbraucherspule (34) eine Schalteinrichtung (33) angebracht ist, die elektrisch derart mit der Steuerschaltung (40) verbunden ist, dass die Schalteinrichtung (33) bei Vorliegen eines Schaltsignals der Steuerschaltung (33) einen Unterbrechungszustand einnimmt, bei dem eine elektrische Verbindung zwischen dem Eingangsanschluss (31) und dem Ausgangsanschluss (32) unterbrochen ist, und bei Abwesenheit des Schaltsignals einen Schließzustand einnimmt, bei dem die elektrische Verbindung zwischen dem Eingangsanschluss (31) und dem Ausgangsanschluss (32) geschlossen ist.

8. Glättungssystem (10) für Netzstromverbraucher (2, 3, 4) mit mehreren, insbesondere nach einem der vorhergehenden Ansprüche ausgebildeten, Wandlereinrichtungen (30; 50), wobei jeder Ausgangsanschluss jeder Wandlereinrichtung (30; 50) mit einem Eingangsanschluss einer Kompensationsanlage (12) verbunden ist und wobei die Kompensationsanlage (12) eine Kompensationssteuerung aufweist, die mit einem Wechselrichter und mit einem Zwischenkreis verbunden ist und die für eine Ermittlung und Steuerung der Phasenverschiebung cos phi ausgebildet ist, um an einem Verbraucheranschluss (15, 16, 17) der Kompensationsanlage (12), der zum Anschluss eines Verbrauchers (2, 3, 4) ausgebildet ist, eine Ausgangsspannung mit vorgebbarer Phasenverschiebung cos phi bereitzustellen.

9. Glättungssystem (10) nach Anspruch 8, **dadurch gekennzeichnet, dass** die Kompensationsanlage (12) elektrisch mit der Steuerschaltung verbunden ist und für eine Bereitstellung eines Messwerts für die Phasenverschiebung cos phi an die Steuerschaltung (40) ausgebildet ist, und dass die Steuerschaltung (40) für eine Bereitstellung eines Kompensationssignals an die Kompensationssteuerung (12) ausgebildet ist, wobei eine Erfassung der Phasenverschiebung cos phi in der Kompensationssteuerung (12) mit einer Abtastrate von mindestens 10 Hz, vorzugweise von wenigstens 20 Hz, insbesondere von wenigstens 50 Hz, ausgebildet ist und dass die Steuerschaltung (40) für eine Bereitstellung des Kompensationssignals mit einer Taktfrequenz von mindestens 10 Hz, vorzugweise von wenigstens 20 Hz, insbesondere von wenigstens 50 Hz ausgebildet ist.

10. Glättungssystem (10) nach Anspruch 8 oder 9, **dadurch gekennzeichnet, dass** alle Verbraucherspulen (34) und alle Steuerspulen (37; 67) an einem gemeinsamen, rahmenförmig ausgebildeten Eisenkern (56) angeordnet sind.
